# EUROPEAN PATENT SPECIFICATION

(11) **EP 3 567 544 B1**
(45) Date of publication and mention of the grant of the patent: **28.06.2023**
(21) Application number: 18171788.5
(22) Date of filing: 11.05.2018
(51) Int. Cl.: G06T 5/00

(54) **METHOD OF CREATING AN IMAGE CHAIN**
VERFAHREN ZUR ERZEUGUNG EINER BILDKETTE
PROCÉDÉ DE CRÉATION D'UNE CHAÎNE D'IMAGES

(43) Date of publication of application: 13.11.2019
(73) Proprietor: Siemens Healthcare GmbH, 91052 Erlangen (DE)
(72) Inventor: Bernhardt, Philipp, 91301 Forchheim (DE); Maier, Andreas, 91054 Erlangen (DE)

(56) References cited:
- GUOPING ZHAO ET AL: "A deep cascade of neural networks for image inpainting, deblurring and denoising", MULTIMEDIA TOOLS AND APPLICATIONS., 3 November 2017 (2017-11-03), XP055489709, US ISSN: 1380-7501, DOI: 10.1007/s11042-017-5320-7
- ELI SCHWARTZ ET AL: "DeepISP: Learning End-to-End Image Processing Pipeline", ARXIV.ORG, CORNELL UNIVERSITY LIBRARY, 201 OLIN LIBRARY CORNELL UNIVERSITY ITHACA, NY 14853, 20 January 2018 (2018-01-20), XP080853443,

## Description

The invention describes a method of creating an image chain according to claim 1; an image processing method according to claim 9; and an imaging system according to claim 12.

The activity leading to this application has received funding from the European Institute of Innovation and Technology (EIT) under grant agreement No EIT/EIT HEALTH/SGA2017/1. This European body receives support from the European Union's the Horizon 2020 research and innovation programme.

In imaging techniques such as X-ray imaging, initial or "raw" data is generally subject to several processing steps in order to obtain an image that can be presented to a user, for example for diagnostic purposes. These initial processing steps are generally referred to collectively as "image pre-processing", since they are necessary in order to obtain an image that can be viewed by a user. Generally, it is necessary to perform a sequence of image processing steps. The sequence or chain of steps or "method blocks" is commonly referred to as the "imaging chain" or "image chain". A typical image chain comprises several method blocks, for example Laplace pyramid decomposition, shrinkage, and recomposition.

Each method block may involve several linear and/or non-linear operations or functions. Examples of functions are filtering, filtering, padding, edge detection, edge preservation, convolution, wavelet shrinkage, etc. A typical image chain may comprise a specific sequence of imaging method blocks, each with a specific sequence of image processing functions.

To operate correctly, an image processing function must typically be configured or set up using appropriate parameters. Many parameters may be necessary to configure a single processing step, for example cut-off frequencies for a Laplace pyramid, standard deviation of Gaussian or bilateral filters, ε (epsilon) for parameter shrinkage, etc. The results of one image processing function may affect an image processing function further downstream in the image chain, and this may also need to be taken into account when choosing the input parameter set for the image processing functions of a method block. However, it can be very difficult to determine the extent to which a specific parameter will affect the overall image quality.

For these reasons, it is difficult and time-consuming to identify a satisfactory input parameter set for each method block of an image chain. Generally, a customer of an imaging system will expect this step to be taken care of by the manufacturer. However, it is difficult for the manufacturer of an imaging system to configure the image chain in such a way that all customers will be equally satisfied with the results. One possible approach may be to allow the customer to take care of parameter selection to some extent, for example using a multiple-choice approach, but even this would require the customer to obtain an in-depth understanding of the entire image chain. It may be expected that such an additional level of effort would be unacceptable to most customers. In a prior art approach of image inpainting, deblurring and denoising, GOUPING ZHAO ET AL: "A deep cascade of neural networks for image inpainting deblurring and denoising" proposes using an inpainting GAN and deblurring-denoising network. However, this would not reduce the amount of parameters enough. In another prior art approach of an end-to-end deep neural model of the camera image signal processing pipeline, ELI SCHWARTZ ET AL: "DeepISP: Learning end-to-end image processing pipeline" are using models, who learned a mapping from the raw low-light mosaiced image to the final visually compelling image and encompasses low-level tasks such as demosaicing and denoising as well as higher-level tasks such as color correction and image adjustment. After all, this method is limited to end-to-end deep learning model that performs the image signal processing of a digital camera. In another prior art, US patent No US5376962, 1994-12-27 discloses a method that generates a single neural network for implementing multiple signal processing functions, which includes plural input, multiple processors, with programmable weighting, derived by simulating network response to test patterns.

It is therefore an object of the invention to provide an improved image processing method that overcomes the problems outlined above.

This object is achieved by the method of claim 1 of creating an image chain; by the image processing method of claim 9; and by the imaging system of claim 12.

An image chain can generally be regarded as a sequence of basic image processing blocks or "method blocks". Each method block serves to complete a certain image processing task such as Laplace decomposition, bilateral filtering, Gaussian filtering, shrinkage, Fourier transformation, or median/quantile filtering.

According to the invention, the method of creating an image chain comprises the steps of claim 1.

The image quality obtained by the inventive image processing method compares favourably with the image quality obtained by conventional image chain, but can be achieved with significantly less effort.

Instead of a sequence of functions that each operates independently and separately, the performance or behaviour of a neural network in the image chain is adjusted according to the other neural networks. An advantage of the inventive method is that this mutual adjustment results in significantly fewer parameters being required for the image chain. This compares favourably with the conventional type of image chain which may easily require several hundred parameters to be specified for its sequence of independent and separate image processing functions.

According to the invention, the image processing method comprises the steps of claim 9.

The image quality obtained by the inventive image processing method compares favourably with the image quality obtained by conventional image chain, but can be achieved with significantly less effort.

According to the invention, the imaging system comprises an input means for obtaining an image generated by an imaging device; a processor realised to carry out the inventive image processing method; and a display unit for presenting the image processing results to a user.

Units or modules of the imaging system mentioned above, in particular the image chain, can be completely or partially realised as software modules running on a processor. A realisation largely in the form of software modules can have the advantage that an image processing application already installed on an existing imaging system can be updated, with relatively little effort, to implement an image chain in the inventive image processing method. The object of the invention is also achieved by a computer program product according to claim 14.

In addition to the computer program, such a computer program product can also comprise further parts such as documentation and/or additional components, also hardware components such as a hardware key (dongle etc.) to facilitate access to the software. A computer readable medium such as a memory stick, a hard-disk or other transportable or permanently-installed carrier can serve to transport and/or to store the executable parts of the computer program product so that these can be read from a processor unit of an imaging system. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

As indicated above, the terms "imaging chain" and "image chain" are synonymous and may be used interchangeably in the following. The inventive method can be used to create an image chain for any kind of image processing task. In the following, without restricting the invention in any way, it may be assumed that the image chain is to be used in a medical imaging system. Similarly, without restricting the invention in any way, it may be assumed that the imaging device used to generate the initial or raw data comprises an X-ray imaging device.

As indicated above, an image chain can generally be regarded as a sequence of basic image processing blocks or "method blocks", whereby each method block serves to complete a certain image processing task such as Laplace decomposition, bilateral filtering, Gaussian filtering, shrinkage, Fourier transformation, or median/quantile filtering. In a conventional image chain, each method block can perform its task using a sequence of image processing functions, and the same image processing function can be used by one or more method blocks. A conventional image chain may therefore be associated with a pool or set of image processing functions.

Therefore, in a preferred embodiment of the invention, the step of identifying the set of image processing functions comprises identifying method blocks of the image chain and identifying any image processing functions implemented in each method block of the image chain.

An image processing function can be a linear operation such as a Gauss filter operation, a Vesselness filter operation to enhance threadlike structures, a wavelet shrinkage operation to perform smoothing or de-noising, etc. A linear operation can be modelled in a mathematically exact manner by a neural network.

An image processing function can be a non-linear operation such as an erosion filter operation, a dilatation filter operation, a median filter operation, etc. A sub-gradient descent technique can be used to identify a neural network for such an image processing function.

Not all non-linear functions can be represented in a mathematically exact manner by a neural network. In a preferred embodiment of the invention, the method of creating an image chain comprises a step of applying a universal approximation theorem to obtain a neural network for such a non-linear operation.

At this stage, the set of image processing functions or operations required to construct the conventional image chain has been replaced by an equivalent set of neural networks.

As indicted above, significantly fewer parameters are required to configure the inventive image chain, compared to a conventional image chain. Therefore, in a preferred embodiment of the invention, the method comprises a step of identifying an initial parameter set for the neural networks of the image chain. The initial parameter set can simply comprise a set of parameters chosen as an "intelligent guess", without any significant effort to choose them with the aim of obtaining an optimal image processing result. Instead, in a preferred embodiment of the invention, the parameters are then fine-tuned or adjusted in the backpropagation step.

Creating the image chain involves replacing each image processing function by its neural network equivalent, as explained above. This can already have the advantage of requiring much less effort in choosing parameters for the image chain method blocks. However, the image chain is optimized even further by making use of a property of neural networks, namely that a cascade or chain of many neural networks can be "collapsed" to give a much shorter chain that approximates the behaviour of the original chain. In a preferred embodiment of the invention, the method of creating an image chain comprises a step of re-arranging the order of image processing functions to obtain an image chain approximation. This results in even fewer parameters and fewer computation steps to arrive at comparable results. In a preferred embodiment of the invention, the image chain approximation comprises at most a single instance of each neural network of the set of neural networks originally identified for the image chain.

As explained above, an initial parameter set can be identified for the inventive image chain. This can be adjusted after performing image processing on one or more test images, for example by comparing a result with an expected or desired result and adjusting the parameter set accordingly. In a particularly preferred embodiment of the invention, a calibration step can be carried out before using the image chain in actual real-life imaging procedures. In the calibration step, an image (for example any image previously obtained by that imaging system or a comparable imaging system) is passed through the image chain multiple times, using a different parameter set each time, to obtain a plurality of image processing results. The plurality of image processing results is preferably shown to a user, who can then select the best image (the user is effectively taking on the role of "loss function"). Subsequently, backpropagation is performed on the basis of the selected, i.e. optimally processed image to identify an optimal set of parameters for the image chain. A typical calibration sequence might involve n first passes using n variants of a "rough" set of parameters, and the process can be repeated for successive adjustments of the parameter set. For example, a calibration sequence can involve four first passes using four variants of a "rough" set of parameters. Of the four candidate result images, the user selects the best one, and the parameter set is adjusted accordingly. In a subsequent step, four second passes are made, using four variants of that updated parameter set. This can be repeated a number of times, resulting in convergence to an optimal parameter set. An advantage of this calibration step is that it is very simple and intuitive from the user's point of view. The user can easily identify which image is "best" without having to understand the significance of the parameters actually being used by the image chain.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 shows an operation set of the inventive image chain, comprising a plurality of neural networks;
Fig 2 shows an image chain created by an embodiment of the inventive method;
Fig 3 shows exemplary results generated using the inventive image chain;
Fig 4 shows an image chain approximation;
Fig 5 and Fig 6 show an embodiment of the inventive imaging system;
Fig 7 shows a prior art image chain;
Fig 8 shows a prior art imaging system.

In the diagrams, like numbers refer to like objects throughout. Objects in the diagrams are not necessarily drawn to scale.

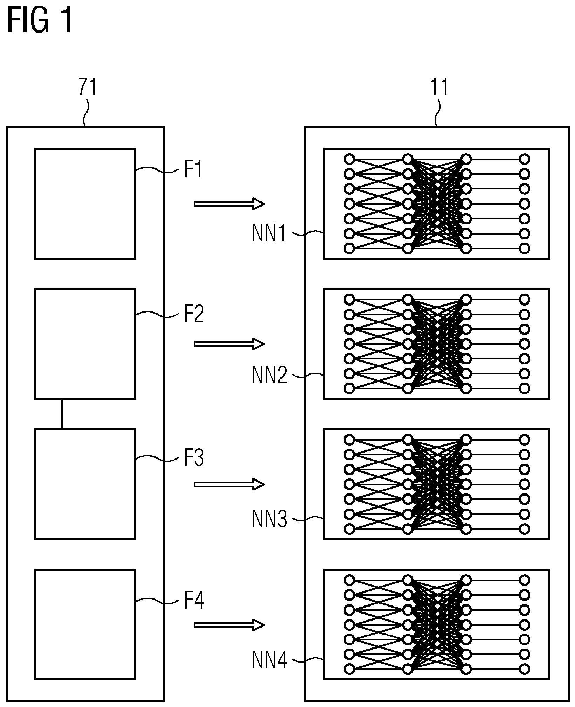

Fig 1 shows an operation set 11 comprising a plurality of neural networks NN1, NN2, NN3, NN4. Each neural network NN1, NN2, NN3, NN4is configured to perform a task corresponding to an image processing function F1, F2, F3, F4 that will be used in a block of an image chain. The intended image chain will be used to the same purpose as a conventional image chain that implements that set 71 of image processing functions F1, F2, F3, F4. Although the diagram indicates only four functions F1, F2, F3, F4 and their corresponding neural networks NN1, NN2, NN3, NN4, it will be understood that there is no limit to the number of functions implemented by an image chain.

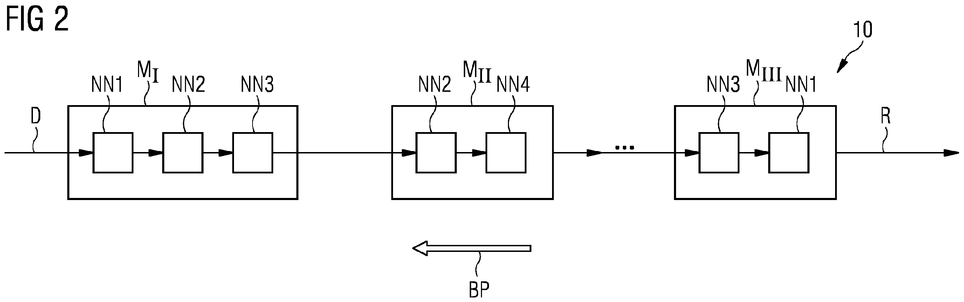

Fig 2 shows an exemplary image chain 10 as created by the inventive method. The input to the chain 10 may be raw 2D image data D obtained from an imaging device such as an X-ray device, for example. The output of the chain 10 is a processed image R that can be presented to a user. For example, a radiologist or doctor may examine the result R for diagnostic purposes. In this exemplary image chain 10, only three method blocks M_{I}, M_{II}, M_{III} are shown, but it shall be understood that an image chain can comprise any number of method blocks. The first method block M_{I} of the image chain 10 implements three neural networks NN1, NN2, NN3 to perform the functions of three corresponding image processing methods F1, F2, F3. For example, the first method block M_{I} may process a 2D X-ray image D by performing Laplace decomposition, then shrinkage, and finally recomposition. The output of the first method block M_{I} is then passed to the second method block M_{II}. The second method block M_{II} of the image chain 10 implements two neural networks NN2, NN4 to perform the functions of two corresponding image processing methods. For example, the second method block M_{II} may process the output of the first method block M_{I} by performing bilateral filtering followed by median filtering. The output of the second method block M_{II} is then passed to the third method block M_{III}. The third method block M_{III} of the image chain 10 also implements two neural networks, in this case neural networks NN3, NN1 to perform the functions of the corresponding image processing methods. For example, the third method block M_{III} may process the output of the second method block M_{II} by Laplace denoising. The exemplary image chain 10 terminates at the output of the third method block M3.

After completion of the image chain 10, input parameters to the method blocks M_{I}, M_{II}, M_{III} are adjusted by applying a back-propagation algorithm as indicated by the arrow BP.

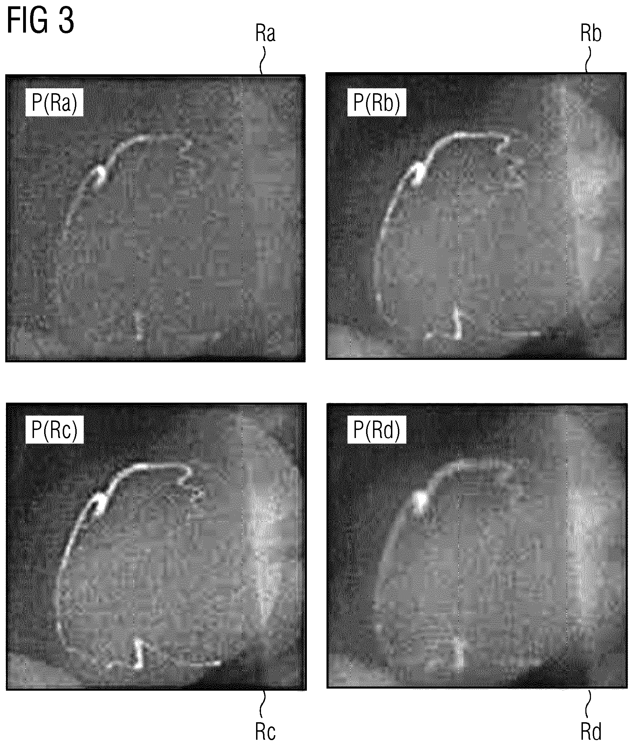

As explained above, an initial training step may be performed by a user to optimize the results. Initial parameters Pᵢₙᵢₜᵢₐₗ for an image chain 10 can have been set automatically or may have been set by the user. Fig 3 shows four exemplary "test results" Ra, Rb, Rc, Rd that may be generated using the image chain 10 of Fig 2 and presented to the user for appraisal. Each result Ra, Rb, Rc, Rd can have been generated using one of four different parameter sets P(Ra), P(Rb), P(Rc), P(Rd). The user - acting as "loss function" - can select the best candidate. In this example, the best candidate may be the image at the bottom left, since this image Rc shows sharper contours and more detail than the other three images. The user can select this image Rc, so that the corresponding set of input parameters P(Rc) is considered to be the optimal parameter set and will be used in future for all equivalent image processing procedures.

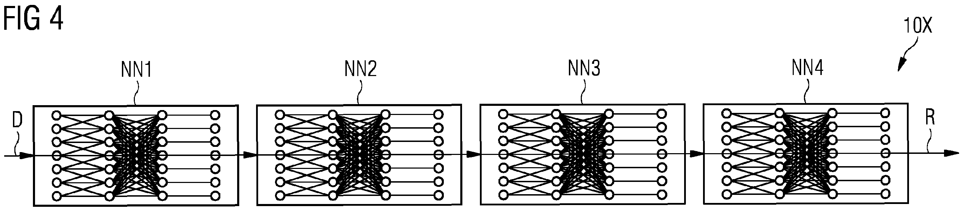

The exemplary image chain 10 of Fig 2 uses various instances of four different neural networks. Each of the neural networks NN1, NN2, NN3 are used twice, i.e. the image chain 10 uses two instances of each of these neural networks NN1, NN2, NN3. In a further embodiment of the inventive method, the image chain 10 of Fig 2 can be optimised by "collapsing" the various steps into a shorter chain. This can be achieved by removing redundant steps that occur multiple times in the pipeline. In the exemplary embodiment shown in Fig 4, the image chain 10 of Fig 2 has been optimized to comprise a sequence of only four stages, i.e. a sequence in which each neural network NN1, NN2, NN3, NN4 is only implemented once. The single instance of a neural network in this image chain 10X makes essentially the same contribution as the two instances of that neural network in the image chain 10 of Fig 2, so that the end result of this image chain 10X will be an approximation of the end result of the image chain 10 of Fig 2. However, the advantage of this approach is that it is faster and uses fewer resources.

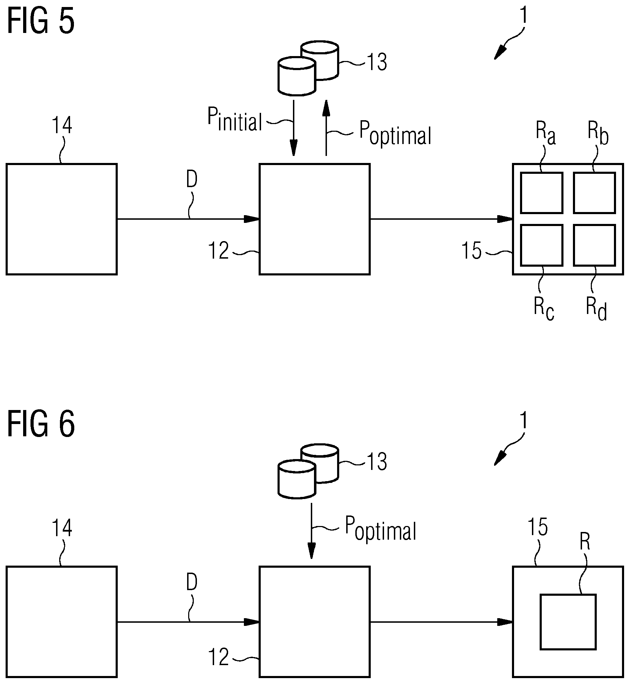

Fig 5 and Fig 6 illustrate the implementation of the inventive method and show a very simple block diagram of an exemplary embodiment of the inventive imaging system 1. The developer or provider of the imaging pre-processor establishes a suitable initial parameter set Pᵢₙᵢₜᵢₐₗ that may be delivered to all customers. As illustrated in Fig 5, the customer can initiate a calibration step by generating an image using an imaging device 14 or supplying a suitable test image. The image data D is input to a processing unit 12 that is configured to carry out the steps of the inventive method using an image chain 10, 10X as explained above, using variants of the initial parameter set Pᵢₙᵢₜᵢₐₗ. Results Ra, Rb, Rc, Rd of the image pre-processing are presented to the user on a suitable display unit 15 such as a monitor. The user chooses the best result from the selection of results Ra, Rb, Rc, Rd. Based on the user's choice, the imaging system 1 identifies the set of parameters Pₒₚₜᵢₘₐₗ that will be used in future for the image chain 10, 10X as indicated in Fig 6. The set of parameters Pₒₚₜᵢₘₐₗ may be stored in any suitable memory module 13. Any imaging procedure that is carried out using the optimal set of parameters Pₒₚₜᵢₘₐₗ for the inventive image chain 10, 10X will deliver optimal results R to the user.

Figs 5 and 6 show hardware such as the imaging device 14 and the display unit 15 to be part of the overall imaging system 1, but it shall be understood that the inventive method can be executed on an existing imaging system 1 by providing a computer-readable medium on which is stored program elements that can be read and executed by a computer unit in order to perform the inventive image pre-processing method when the program elements are executed by the computer unit.

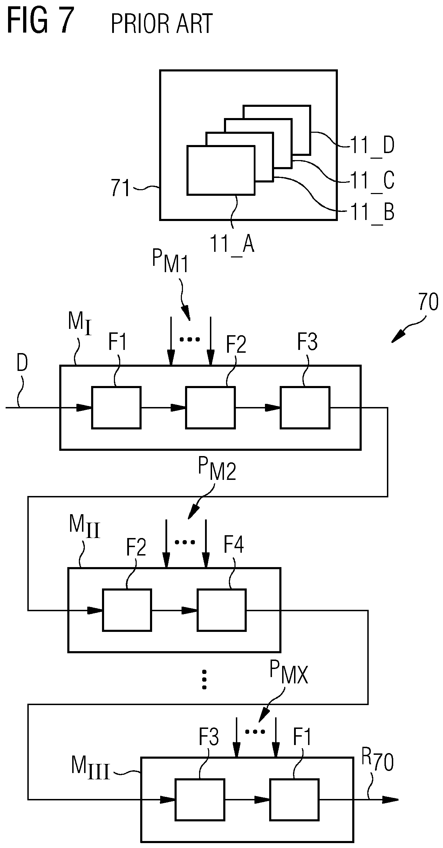

Fig 7 shows an exemplary image chain 70 as implemented in the prior art. This image chain 70 is analogous to the image chain of Fig 2 and comprises three method blocks M_{I}, M_{II}, M_{III}. Each method block M_{I}, M_{II}, M_{III} is configured to perform a sequence of operations F1, F2, F3, F4 of an operation set 71 indicated in the upper part of the diagram. The first method block M_{I} of the image chain 70 implements three image processing functions F1, F2, F3 in order to process a 2D X-ray image, for example in order to perform Laplace decomposition, then shrinkage, and finally recomposition. The output of the first method block M_{I} is then passed to the second method block M_{II}. The second method block M_{II} of the image chain 70 implements two image processing functions F1, F4, for example to carry out various filtering steps. The output of the second method block M_{II} is then passed to the third method block M_{III}. The third method block M_{III} of the image chain 70 implements two image processing functions F3, F1 in order to complete the processing. The image chain 70 terminates at the output of the third method block M_{III}. For the image chain 70 to function correctly, it is necessary to choose specific parameter sets P_{M1}, P_{M2}, P_{M3} for the various stages of the image chain 70. Each parameter set P_{M1}, P_{M2}, P_{M3} that is input to a method block M_{I}, M_{II}, M_{III} can comprise many individual parameters. As explained above, it is not easy to correctly choose suitable parameter values for the operations F1, F2, F3, F4 of a method block M_{I}, M_{II}, M_{III}, and it may be impossible to predict how the parameters chosen for one method block may affect the performance of a method block further downstream in the image chain 70. Furthermore, different customers of an image processing system my have very different requirements, which makes it even more difficult for a provider to deliver a system that will function equally well for all customers. This means that the user of a system that implements a prior art image chain may have to deal with the issue of identifying and choosing suitable parameters P_{M1}, P_{M2}, P_{MX}. Because it is difficult to choose suitable parameters for the prior art image chain 70, the quality of the resulting image R₇₀ may be less than optimal.

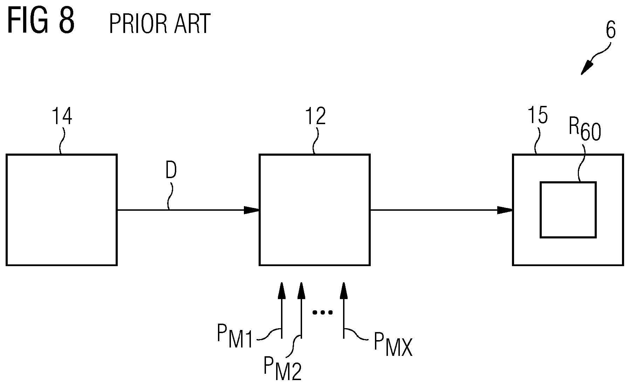

Fig 8 shows a very simple block diagram of a prior art imaging system 6. Similar to Fig 6 and Fig 7 above, the imaging system 6 comprises an imaging device 14, a processing unit 12, and a display unit 15, on which the resulting image R₆₀ is shown. Suitable parameters P_{M1}, P_{M2}, P_{MX} are input to the processing unit 12, by the provider and/or by the user. The outcome of the prior art image chain is shown in the display unit 15.

Although the present invention has been disclosed in the form of preferred embodiments and variations thereon, it will be understood that numerous additional modifications and variations could be made thereto without departing from the scope of the invention. For example, although the method has been described in the context of processing 2D X-ray images, the method can equally be applied to the processing of 3D, 2D-plus-time and also 3D-plus-time images.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of creating an image chain (10), wherein an image chain (10) comprises a specific sequence of method blocks (MI, MII, MIII), wherein each method block (MI, MII, MIII) serves to complete a certain image processing task, and wherein each method block performs its task using a sequence of image processing functions, comprising the steps of
- identifying image processing functions (F1, F2, F3, F4) required by each method block of the image chain (10);
- replacing each image processing function (F1, F2, F3, F4) by a corresponding neural network (NN1, NN2, NN3, NN4);
- determining a sequence of execution of instances of the neural networks (NN1, NN2, NN3, NN4) to give the image chain (10);
- optimizing the image chain into a shorter chain that approximates the behaviour of the original image chain by collapsing a chain of the neural networks ; and
- applying backpropagation through the neural networks (NN1, NN2, NN3, NN4) of the image chain (10) to identify an optimal set of parameters for the image chain of the neural networks.

2. A method according to claim 1, wherein the step of identifying the image processing functions (F1, F2, F3, F4) comprises identifying method blocks (M_{I}, M_{II}, M_{III}) of the image chain (10) and identifying any image processing functions (F1, F2, F3, F4) implemented in each method block (M_{I}, M_{II}, M_{III}) of the image chain (10) .

3. A method according to claim 1 or claim 2, wherein an image processing function (F1, F2, F3, F4) comprises a linear operation to carry out any of a Gauss filter operation, a Vesselness filter operation, a wavelet shrinkage operation.

4. A method according to claim 1 or claim 2, wherein an image processing function (F1, F2, F3, F4) comprises a non-linear operation to carry out any of an erosion filter operation, a dilatation filter operation, a median filter operation.

5. A method according to any of the preceding claims, comprising a step of applying a universal approximation theorem to obtain a neural network for a non-linear operation.

6. A method according to any of the preceding claims, comprising a step of identifying an initial parameter set (Pᵢₙᵢₜᵢₐₗ) for the neural networks (NN1, NN2, NN3, NN4) of the image chain (10).

7. A method according to any of the preceding claims, wherein parameters of the neural networks (NN1, NN2, NN3, NN4) of the image chain (10) are adjusted in the backpropagation step (BP).

8. A method according to any of the preceding claims, wherein the shorter chain approximating the original image chain (10X) comprises at most a single instance of each neural network (NN1, NN2, NN3, NN4).

9. An image processing method, comprising the steps of
- creating an image chain (10) using the method according to any of claims 1 to 8; and
- passing an image (D) through the image chain (10) to obtain an image processing result (R, R1, R2, R3, R4).

10. An image processing method according to claim 9,
comprising a calibration step wherein an image (D) is passed through the image chain (10) multiple times to obtain a plurality of image processing results (Ra, Rb, Rc, Rd), using a different parameter set each time, and wherein back-propagation (BP) is performed on the basis of an optimally processed image.

11. An image processing method according to claim 10, wherein the plurality of image processing results (Ra, Rb, Rc, Rd) is shown to a user, and wherein the optimally processed image is identified by the user.

12. An imaging system (1) comprising
- an input means for obtaining an image (D) generated by an imaging device (14);
- a processor (12) realised to carry out the image processing method according to any of claims 9 to 11; and
- a display unit (15) for presenting the image processing results (Ra, Rb, Rc, Rd) to a user.

13. An imaging system according to claim 12, wherein the imaging device (14) comprises an X-ray imaging device (14).

14. A computer program product comprising a computer program that is directly loadable into a memory of a control unit of an imaging system (1) and which comprises program elements for performing the steps of the method according to any of claims 9 to 11 when the computer program is executed by the control unit of the imaging system (1).

## Patentansprüche

1. Verfahren zur Erzeugung einer Bildkette (10), wobei eine Bildkette (10) eine spezifische Sequenz von Verfahrensblöcken (MI, MII, MIII) umfasst, wobei jeder Verfahrensblock (MI, MII, MIII) dazu dient, eine bestimmte Bildverarbeitungsaufgabe abzuschließen, und wobei jeder Verfahrensblock seine Aufgabe unter Verwendung einer Sequenz von Bildverarbeitungsfunktionen durchführt, umfassend die Schritte
- Identifizieren von Bildverarbeitungsfunktionen (F1, F2, F3, F4), die jeder Verfahrensblock der Bildkette (10) erfordert;
- Ersetzen jeder Bildverarbeitungsfunktion (F1, F2, F3, F4) durch ein entsprechendes neuronales Netzwerk (NN1, NN2, NN3, NN4);
- Bestimmen einer Sequenz der Ausführung von Instanzen der neuronalen Netzwerke (NN1, NN2, NN3, NN4), um die Bildkette (10) zu ergeben;
- Optimieren der Bildkette zu einer kürzeren Kette, die sich dem Verhalten der Originalbildkette annähert, indem eine Kette der neuronalen Netzwerke eingeklappt wird; und
- Anwenden von Rückpropagierung (Backpropagation) durch die neuronalen Netzwerke (NN1, NN2, NN3, NN4) der Bildkette (10) hindurch, um einen optimalen Satz von Parametern für die Bildkette der neuronalen Netzwerke zu identifizieren.

2. Verfahren nach Anspruch 1, wobei der Schritt des Identifizierens der Bildverarbeitungsfunktionen (F1, F2, F3, F4) Identifizieren von Verfahrensblöcken (MI, MII, MIII) der Bildkette (10) und Identifizieren jedweder Bildverarbeitungsfunktionen (F1, F2, F3, F4) umfasst, die in jedem Verfahrensblock (MI, MII, MIII) der Bildkette (10) implementiert sind.

3. Verfahren nach Anspruch 1 oder Anspruch 2, wobei eine Bildverarbeitungsfunktion (F1, F2, F3, F4) eine lineare Operation zur Durchführung von jedweder von einer Gauss-Filteroperation, einer Vesselness-Filteroperation, einer Wavelet-Schrumpfungsoperation umfasst.

4. Verfahren nach Anspruch 1 oder Anspruch 2, wobei eine Bildverarbeitungsfunktion (F1, F2, F3, F4) eine nichtlineare Operation zur Durchführung von jedweder von einer Erosionsfilteroperation, einer Dilatationsfilteroperation, einer Medianwertfilteroperation umfasst.

5. Verfahren nach einem der vorhergehenden Ansprüche, umfassend einen Schritt des Anwendens eines universellen Approximationssatzes, um ein neuronales Netzwerk für eine nichtlineare Operation zu erhalten.

6. Verfahren nach einem der vorhergehenden Ansprüche, umfassend einen Schritt des Identifizierens eines Ausgangsparametersatzes (PAusgang) für die neuronalen Netzwerke (NN1, NN2, NN3, NN4) der Bildkette (10).

7. Verfahren nach einem der vorhergehenden Ansprüche, wobei Parameter der neuronalen Netzwerke (NN1, NN2, NN3, NN4) der Bildkette (10) in dem Backpropagationsschritt (BP) angepasst werden.

8. Verfahren nach einem der vorhergehenden Ansprüche, wobei die kürzere Kette, die sich der Originalbildkette (10X) annähert, höchstens eine einzige Instanz von jedem neuronalen Netzwerk (NN1, NN2, NN3, NN4) umfasst.

9. Bildverarbeitungsverfahren, umfassend die Schritte
- Erzeugen einer Bildkette (10) unter Verwendung des Verfahrens gemäß einem der Ansprüche 1 bis 8; und
- Führen eines Bildes (D) durch die Bildkette (10), um ein Bildverarbeitungsergebnis (R, R1, R2, R3, R4) zu erhalten.

10. Bildverarbeitungsverfahren nach Anspruch 9,
umfassend einen Kalibrierungsschritt, wobei ein Bild (D) mehrfach durch die Bildkette (10) geführt wird, um eine Vielzahl von Bildverarbeitungsergebnissen (Ra, Rb, Rc, Rd) zu erhalten, wobei bei jedem Mal ein anderer Parametersatz verwendet wird, und wobei basierend auf einem optimal verarbeiteten Bild Backpropagation (BP) durchgeführt wird.

11. Bildverarbeitungsverfahren nach Anspruch 10, wobei die Vielzahl von Bildverarbeitungsergebnissen (Ra, Rb, Rc, Rd) einem Benutzer gezeigt wird, und wobei durch den Benutzer das optimal verarbeitete Bild identifiziert wird.

12. Bildgebungssystem (1), umfassend:
- ein Eingabemittel zum Erhalten eines Bildes (D), das durch eine Bildgebungsvorrichtung (14) generiert wurde;
- einen Prozessor (12, der zur Durchführung des Bildverarbeitungsverfahrens nach einem der Ansprüche 9 bis 11 realisiert wurde; und
- eine Anzeigeeinheit (15) zum Präsentieren der Bildverarbeitungsergebnisse (Ra, Rb, Rc, Rd) an einen Benutzer.

13. Bildgebungssystem nach Anspruch 12, wobei die Bildgebungsvorrichtung (14) eine Röntgenbildgebungsvorrichtung (14) umfasst.

14. Computerprogrammprodukt, umfassend ein Computerprogramm, das direkt in einen Speicher einer Steuereinheit eines Bildgebungssystems (1) ladbar ist, und das Programmelemente zum Durchführen der Schritte des Verfahrens gemäß einem der Ansprüche 9 bis 11 umfasst, wenn das Computerprogramm durch die Steuereinheit des Bildgebungssystems (1) ausgeführt wird.

## Revendications

1. Procédé de création d'une chaîne (10) d'image, dans lequel une chaîne (10) d'image comprend une séquence précise de blocs (MI, MII, MIII) de méthode, dans lequel chaque bloc (MI, MII, MIII) de méthode sert à parfaire une certaine tâche de traitement d'image, et dans lequel chaque bloc de méthode effectue sa tâche en utilisant une séquence de fonctions de traitement d'image, comprenant les stades dans lesquels
- on identifie des fonctions (F1, F2, F3, F4) de traitement d'image requises par chaque bloc de méthode de la chaîne (10) d'image ;
- on remplace chaque fonction (F1, F2, F3, F4) de traitement d'image par un réseau (NN1, NN2, NN3, NN4) neuronal correspondant ;
- on détermine une séquence d'exécution d'instances des réseaux (NN1, NN2, NN3, NN4) neuronaux pour donner la chaîne (10) d'image ;
- on optimise la chaîne d'image en une chaîne plus courte, qui donne une approximation du comportement de la chaîne d'image originale en réduisant une chaîne des réseaux neuronaux ; et
- on applique une rétropropagation dans les réseaux (NN1, NN2, NN3, NN4) neuronaux de la chaîne (10) d'image pour identifier un ensemble optimum de paramètres pour la chaîne d'image des réseaux neuronaux.

2. Procédé suivant la revendication 1, dans lequel le stade d'identification des fonctions (F1, F2, F3, F4) de traitement d'image comprend l'identification de blocs (M_{I}, M_{II}, M_{III}) de méthode de la chaîne (10) d'image et l'identification de toute fonction (F1, F2, F3, F4) de traitement d'image mise en œuvre dans chaque bloc (M_{I}, M_{II}, M_{III}) de méthode de la chaîne (10) d'image.

3. Procédé suivant la revendication 1 ou la revendication 2, dans lequel une fonction (F1, F2, F3, F4) de traitement d'image comprend une opération linéaire pour effectuer l'une quelconque d'une opération de filtrage de Gauss, d'une opération de filtrage de Vesselness, d'une opération de retrait d'ondelettes.

4. Procédé suivant la revendication 1 ou la revendication 2, dans lequel une fonction (F1, F2, F3, F4) de traitement d'image comprend une opération non linéaire pour effectuer l'une quelconque d'une opération de filtrage d'érosion, d'une opération de filtrage de dilatation, d'une opération de filtrage médian.

5. Procédé suivant l'une quelconque des revendications précédentes, comprenant un stade d'application d'un théorème d'approximation universel pour obtenir un réseau neuronal pour une opération non linéaire.

6. Procédé suivant l'une quelconque des revendications précédentes, comprenant un stade d'identification d'un ensemble (Pᵢₙᵢₜᵢₐₗ) initial de paramètres des réseaux (NN1, NN2, NN3, NN4) neuronaux de la chaîne (10) d'image.

7. Procédé suivant l'une quelconque des revendications précédentes, dans lequel on règle des paramètres des réseaux (NN1, NN2, NN3, NN4) neuronaux de la chaîne (10) d'image dans le stade (BP) de rétropropagation.

8. Procédé suivant l'une quelconque des revendications précédentes, dans lequel la chaîne plus courte donnant une approximation de la chaîne (10X) d'image originale comprend au plus une instance unique de chaque réseau (NN1, NN2, NN3, NN4) neuronal.

9. Procédé de traitement d'image comprenant les stades dans lesquels
- on crée une chaîne (10) d'image en utilisant le procédé suivant l'une quelconque des revendications 1 à 8 ; et
- on fait passer une image (D) dans la chaîne (10) d'image pour obtenir un résultat (R, R1, R2, R3, R4) de traitement d'image.

10. Procédé de traitement d'image suivant la revendication 9, comprenant un stade d'étalonnage, dans lequel on fait passer une image (D) dans la chaîne (10) d'image de multiples fois, pour obtenir une pluralité de résultats (Ra, Rb, Rc, Rd) de traitement d'image en utilisant chaque fois un ensemble différent de paramètres, et dans lequel on effectue une rétropropagation (BP) sur la base d'une image traitée de manière optimum.

11. Procédé de traitement d'image suivant la revendication 10, dans lequel on montre la pluralité de résultats (Ra, Rb, Rc, Rd) de traitement d'image à un utilisateur, et dans lequel l'image traitée de manière optimum est identifiée par l'utilisateur.

12. Système (1) d'imagerie comprenant
- un moyen d'entrée pour obtenir une image (D) produite par un dispositif (14) d'imagerie ;
- un processeur (12) réalisé pour effectuer le procédé de traitement d'image suivant l'une quelconque des revendications 9 à 11 ; et
- une unité (15) d'affichage pour présenter les résultats (Ra, Rb, Rc, Rd) du traitement d'image à un utilisateur.

13. Système d'imagerie suivant la revendication 12, dans lequel le dispositif (14) d'imagerie comprend un dispositif (14) d'imagerie à rayons X.

14. Produit de programme d'ordinateur comprenant un programme d'ordinateur, qui peut être chargé directement dans une mémoire d'une unité de commande d'un système (1) d'imagerie et qui comprend des éléments de programme pour effectuer les stades du procédé suivant l'une quelconque des revendications 9 à 11, lorsque le programme d'ordinateur est exécuté par l'unité de commande du système (1) d'imagerie.
